(19) Europäisches Patentamt
European Patent Office
Office européen des brevets

(11) **EP 4 400 202 A1**

(12) **EUROPEAN PATENT APPLICATION**

(43) Date of publication:
**17.07.2024 Bulletin 2024/29**

(21) Application number: **23151699.8**

(22) Date of filing: **16.01.2023**

(51) International Patent Classification (IPC):
**B01D 53/92** (2006.01)   **B01D 46/24** (2006.01)
**B01J 37/02** (2006.01)   **B01D 53/94** (2006.01)

(52) Cooperative Patent Classification (CPC):
**B01D 53/92; B01D 53/9468; B01J 35/56;**
**B01J 37/0215; B01J 37/0219; B01J 37/0228;**
**B01J 37/0232; B01J 37/0246;** B01D 2255/50;
B01D 2255/9022

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Johnson Matthey Public Limited**
**Company**
**London EC4A 4AB (GB)**

(72) Inventors:
• **CHAVDA, Ketan Ravi**
**Royston, SG8 5HE (GB)**
• **TURNER, John**
**Royston, SG8 5HE (GB)**

(74) Representative: **Boult Wade Tennant LLP**
**Salisbury Square House**
**8 Salisbury Square**
**London EC4Y 8AP (GB)**

(54) **COATINGS ON A MONOLITH ARTICLE**

(57)   The present disclosure relates to a coated monolith article for filtering particulate matter from exhaust gases. The monolith article has an inlet end and an outlet end, and comprises a coating. The article comprises an inorganic oxide applied to the inlet end of the article and a washcoat coating applied to the outlet end of the article. The present disclosure also relates to a method of forming the coated monolith article as described herein and an exhaust system with a coated monolith article as described herein.

Figure 1

**Description**

**FIELD OF THE INVENTION**

The present disclosure relates to a coated monolith article for filtering particulate matter from exhaust gases. The monolith article has an inlet end and an outlet end, and comprises a coating. The article comprises an inorganic oxide applied to the inlet end of the article and a washcoat coating applied to the outlet end of the article. The present disclosure also relates to a method of forming the coated monolith article as described herein and an exhaust system with a coated monolith article as described herein.

**BACKGROUND OF THE INVENTION**

There are concerns about emissions of particulate matter (PM), commonly referred to as soot, from internal combustion engines and especially from diesel and gasoline engines in automotive applications. The main concerns are associated with potential health effects, and in particular with very tiny particles having sizes in the nanometer range.
Diesel particulate filters (DPFs) and gasoline particulate filters (GPFs) have been fabricated using a variety of materials including sintered metal, ceramic or metal fibers etc., with the most common type in actual mass production being the wall-flow kind made from porous ceramic material fabricated in the form of a monolithic array of many small channels running along the length of the body. Alternate channels are plugged at one end so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50 $\mu$m and usually about 15 $\mu$m. In marked contrast, the size of most diesel particulate matter from a modem passenger car high speed diesel engine is very much smaller, e.g. 10 to 200 nm.
Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.
For some filters, for example light duty diesel particulate filters, it is necessary to remove trapped PM periodically from the filter to prevent the build-up of excessive back pressure that is detrimental to engine performance and can cause poor fuel economy. So in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.
Thus, it would be desirable to improve and or maintain filtration efficiency at all times - for example during the early life of a filter when it is first used, and or during regeneration and immediately afterwards, and or when the filter is loaded with soot.
WO2021/028691 describes a method of coating a filter comprising a porous substrate having inlet and outlet surfaces, wherein the inlet surfaces are separated from the outlet surfaces by a porous structure. The filter is coated with a dry powder which is applied through the inlet face of the filter.
WO2021/165658 describes an apparatus and method for coating a filter comprising a porous substrate with inlet and outlet surfaces. The filter is coated with a dry powder through the inlet face of the of the filter and the dry powder comprises a metal compound for forming a metal oxide by thermal decomposition.
WO2011/151711 describes a method of making a filter comprising a porous substrate having inlet surfaces and outlet surfaces, wherein the inlet surfaces are separated from the outlet surfaces by a porous structure containing pores of a first mean pore size. The inlet surfaces comprise a bridge network comprising interconnected particles of refractory material over the pores of the porous structure. The method comprises the step of contacting inlet surfaces of the filter substrate with an aerosol comprising refractory material in dry powder form.

**SUMMARY OF THE INVENTION**

In a first aspect, the present disclosure provides a coated monolith article for filtering particulate matter from exhaust gases.

The monolith article comprises an inlet end and an outlet end, and a coating, said coating comprising:

a) an inorganic oxide coating applied to the inlet end of the article, and
b) a washcoat coating applied to the outlet end of the article.

In a further aspect, there is a provided a method of forming a monolith article (e.g. the monolith article as described herein), said method comprising:

i) providing a monolith article which has an inlet end and an outlet end,
ii) applying an inorganic oxide coating to the inlet end,
iii) optionally drying and/or calcining the inorganic coating,
iv) applying a washcoat coating to the outlet end,
v) optionally drying/calcining the resulting article.

In a further aspect, there is provided an exhaust gas system comprising a coated monolith article (e.g. a coated monolith article as described herein or made by the method as described herein), and, optionally, a combustion engine.
In a further aspect, there is provided a method for the treatment of an exhaust gas, the method comprising contacting an exhaust gas with a coated monolith article (e.g., a coated monolith article as described herein or made by the method as described herein).
Applying an inorganic coating as a first step followed by the use of a washcoat was not thought possible at the time of the invention as the inorganic coating would not have been stable during the subsequent application of the washcoat. Even when the inorganic coating was adjusted such that it was stable during the application of the washcoat, application of the inorganic coating as the first step was found to give less control of the final backpressure and also less control of the washcoat location. The present inventors have surprisingly found that by adjusting the composition of the inorganic coating, the final backpressure and washcoat location can be controlled, and the inorganic coating is stable to the subsequent washcoat application.
The coated monolith article as herein described (or made by the method as herein described) has improved properties over coated monolith articles of the prior art. For example, the coated monolith article according to the invention has improved filtration efficiency without experiencing backpressure increases normally associated with improved filtration efficiencies. The coated monolith article of the invention has low backpressure and high filtration efficiency.

## BRIEF DESCRIPTION OF THE FIGURES

Figure 1 shows a coated monolith article according to the invention.
Figure 2 shows the filtration efficiency for comparative examples 1 and 2, and sample 3.
Figure 3 shows the mass loading and cold flow back pressure for comparative examples 1 and 2, and sample 3.
Figure 4 shows the filtration efficiency for comparative examples 1 and 2, and sample 3.

## DETAILED DESCRIPTION OF THE INVENTION

In a first aspect, the present disclosure provides a coated monolith article for filtering particulate matter from exhaust gases.
The monolith article comprises an inlet end and an outlet end, and a coating, said coating comprising:

a) an inorganic oxide coating applied to the inlet end of the article, and
b) a washcoat coating applied to the outlet end of the article.

Monolith article

The monolith article as herein described can comprise a plurality of channels for the passage of an exhaust gas, each channel having a gas-contacting surface. Monolith articles are well-known in the art.
Monolith articles may sometimes be referred to as substrates, preferably honeycomb substrates, more preferably ceramic honeycomb substrates. Such substrates comprise a plurality of channels which are suitable for the passage of an exhaust gas. The channels are parallel and run from an inlet end (or a first end) to an outlet end (or a second end), i.e., the channels run axially through the article. Typically, the channels have a square cross-section though any known monolith design may be employed.

The monolith article/substrate may be formed, for example, from sintered metal, ceramic or metal fibers, etc. For example, the article may be formed from cordierite, various forms of silicon carbide or aluminum titanate.

In some embodiments, the monolith article is a monolith filter. It is particularly preferred that the monolith filter is a wall-flow filter (which may also be known as a wall-flow monolith article). A wall-flow filter is well-known and typically, adjacent channels are alternatively plugged at each end of the monolith article such that, in use, the exhaust gas passes along an inlet channel (i.e., a channel open at an inlet end of the monolith article for receiving an exhaust gas) and is forced to pass through the channel walls an into an adjacent outlet channel (i.e., a channel open at an outlet end of the monolith article).

The channel walls can have a distribution of fine pores providing the monolith article with the required porosity, the average dimensions of the pores in the channel walls, e.g., the filter walls, are typically in the range from 5 to 50 $\mu$m. Each channel can have a gas-contacting surface. That is, each channel can have a surface suitable for contacting, for example, an exhaust gas when in use. The surface may be provided by the channel wall surface and/or by the pores contained therein.

In another particularly preferred embodiment, the monolith article is a catalyst article (i.e., a catalytic filter). Catalytic porous monolith articles are well-known and exhibit a catalytic function such as oxidation, $NO_x$-trapping, or selective catalytic reduction activity. The catalyst article can also be selected from a three-way catalyst (TWC), $NO_x$ absorber, oxidation catalyst, selective reduction catalyst (SCR), hydrocarbon trap and a lean $NO_x$ catalyst, for example.

In another particularly preferred embodiment, the monolith article is a catalytic wall-flow filter. Consequently, the article may, for example, be a catalyzed soot filter (CSF), a selective catalytic reduction filter (SCRF), a lean $NO_x$ trap filter (LNTF), a gasoline particulate filter (GPF), an ammonia slip catalyst filter (ASCF) or a combination of two or more thereof (e.g., a filter comprising a selective catalytic reduction (SCR) catalyst and an ammonia slip catalyst (ASC).

In another particularly preferred embodiment, the monolith article is a gasoline particulate filter, which is a catalytic wall-flow filter comprising a TWC catalyst. Generally, gasoline particulate filter comprises a platinum group metal selected from the group consisting of Pt, Pd, Rh and mixtures thereof; an oxygen storage capacity (OSC) material; and optionally an inorganic support material.

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter finds particular application when configured for use with an internal combustion engine in the form of a diesel or gasoline engine.

The wall-flow filter may be an asymmetric wall-flow filter. Asymmetric wall-flow filter designs are known, for example, from WO 2005/030365, which discloses a honeycomb filter including an array of interconnecting porous walls which define an array of first channels and second channels. The first channels are bordered on their sides by the second channels and have a larger hydraulic diameter than the second channels. The first channels have a square cross-section, with corners of the first channels having a shape such that the thickness of the porous walls adjoining the corners of the first channels is comparable to the thickness of the porous walls adjoining edges of the first and second channels. In use, the first channels having the larger hydraulic diameter are oriented to the upstream side. Society of Automotive Engineers SAE Technical Paper Series 2007-01-0656 explains that: "There is a pressure drop penalty [for a catalyzed asymmetric cell technology (ACT) wall flow filter] in the clean state for the ACT design due to the contraction and expansion of gases at the filter channel inlet and outlet. However, a filter spends very little time in a totally clean (fully regenerated) state while in operation on a vehicle." WO2005/030365 also explains that the advantages of the asymmetric filter design include increased effective surface area available for collecting soot and ash particles in the inlet portion of the honeycomb filter, thus increasing the overall storage capacity of the honeycomb filter. Common general knowledge textbook "Catalytic Air Pollution Control - Commercial Technology", 3rd Edition, Ronald M. Heck et al, John Wiley & Sons, Inc. Hoboken, N.J., USA (2009) pp. 338-340 explains that: "Such a [asymmetric filter] channel design enables higher ash storage capacity combined with lower ash-loaded back pressure due to larger hydraulic diameter and higher open volume at inlet. The ACT design also helps preserve the mechanical and thermal durability of the filter".

Inorganic oxide coating

The inorganic oxide coating as herein described can comprise inorganic particles comprising an aluminosilicate zeolite, and a silicone resin.

The inorganic particles can comprise an aluminosilicate zeolite having a SAR (SAR) of greater than 10:1, greater than 20:1, greater than 50:1, greater than 75:1 or greater than 100:1. The aluminosilicate zeolite preferably has a SAR of greater than 200:1, more preferably greater than 300:1, even more preferably greater than 400:1, most preferably greater than 500:1. In some embodiments, the aluminosilicate zeolite has a SAR of greater than 1000: 1.

The aluminosilicate zeolite may have a framework type selected from ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AVL, AWO, AWW, BCT, BEA, BEC, BIK, BOG, BPH, BRE, CAN, CAS, SCO, CFI, SGF, CGS, CHA, CHI, CLO, CON, CZP, DAC, DDR, DFO, DFT, DOH, DON, EAB, EDI, EEI, EMT, EON, EPI, ERI, ESV, ETR, EUO, FAU, FER, FRA, GIS, GIU, GME, GON, GOO, HEU, IFR, IFY, IHW, IRN, ISV, ITE, ITH, ITW, IWR, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSO, MTF, MTN, MTT, MTW, MWF, MWW, NAB, NAT, NES, NON, NPO, NPT, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SFW, SGT, SOD, SOS, SSY, STF, STI, STT, TER, THO, TON, TSC, UEI, UFI, UOZ, USI, UTL, VET, WI, VNI, VSV, WIE, WEN, YUG, ZON, or combinations thereof. In some embodiments, the aluminosilicate zeolite may have a framework type selected from AEI, AFT, AFV, AFX, AVL, BEA, CHA, DDR, EAB, EEI, ERI, FAU, FER, IFY, IRN, KFI, LEV, LTA, LTN, MER, MOR, MWF, MFI, NPT, PAU, RHO, RIE, RTH, SAS, SAT, SAV, SFW, TSC, and UFI. In some embodiments, the aluminosilicate zeolite may have a framework type selected from the group comprising (or consisting of) AEI, BEA, CHA, FAU (e.g. zeolite Y) and MFI. In some embodiments, the aluminosilicate zeolite has a BEA framework type. In some embodiments, the aluminosilicate zeolite has a MFI framework type. In some embodiments, the aluminosilicate has a FAU framework type. In some embodiments, the zeolite is zeolite Y.

In addition to the aluminosilicate zeolite, the inorganic particles may comprise a second zeolite material. Examples of suitable second zeolite materials include silicate zeolites, aluminosilicate zeolites, metal-substituted aluminosilicate zeolites, AlPO, MeAlPO, SAPO, MeAPSO, and the like. The second zeolite material may have a framework type selected from ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AVL, AWO, AWW, BCT, BEA, BEC, BIK, BOG, BPH, BRE, CAN, CAS, SCO, CFI, SGF, CGS, CHA, CHI, CLO, CON, CZP, DAC, DDR, DFO, DFT, DOH, DON, EAB, EDI, EEI, EMT, EON, EPI, ERI, ESV, ETR, EUO, FAU, FER, FRA, GIS, GIU, GME, GON, GOO, HEU, IFR, IFY, IHW, IRN, ISV, ITE, ITH, ITW, IWR, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSO, MTF, MTN, MTT, MTW, MWF, MWW, NAB, NAT, NES, NON, NPO, NPT, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SFW, SGT, SOD, SOS, SSY, STF, STI, STT, TER, THO, TON, TSC, UEI, UFI, UOZ, USI, UTL, VET, WI, VNI, VSV, WIE, WEN, YUG, ZON, or combinations thereof.

The inorganic particles may comprise refractory oxide particles which can be based on an oxide selected from the group comprising (or consisting of) alumina, silica, zirconia, ceria, chromia, magnesia, calcia, titania and mixed oxides of any two or more thereof. Preferably, the refractory oxide particles comprise calcium aluminate, fumed alumina, fumed silica, fumed titania, fumed zirconia, fumed ceria, alumina aerogel, silica aerogel, titania aerogel, zirconia aerogel, ceria aerogel or a mixture thereof. The one or more fumed refractory powders (refractory oxide particles) may be produced by a pyrogenic process, for example flame pyrolysis.

The amount of the aluminosilicate zeolite present in the inorganic particles can be from 10 to 99 wt%, preferably from 50 to 99 wt%, more preferably from 80 to 99 wt%, and most preferably from 90 to 99 wt%. In some embodiments, the inorganic particles comprise (or consist of) the aluminosilicate zeolite. In some embodiments, the inorganic particles consist of the aluminosilicate zeolite having a SAR of greater than 100:1. In some embodiments, the inorganic particles comprise (or consist of) the aluminosilicate zeolite having a SAR of greater than 200:1. In some embodiments, the inorganic particles comprise (or consist of) the aluminosilicate zeolite having a SAR of greater than 300:1. In some embodiments, the inorganic particles comprise (or consist of) the aluminosilicate zeolite having a SAR of greater than 400:1. In some embodiments, the inorganic particles comprise (or consist of) the aluminosilicate zeolite having a SAR of greater than 500:1. In some embodiments, the inorganic particles comprise (or consist of) the aluminosilicate zeolite having a SAR of greater than 1000: 1.

Silicone resins are known and are branched, cage-like oligosiloxanes and polysiloxanes. The branching in silicone resins results from the presence of so called "T" and/or "Q" units in the resin which refer to $RSiO_3$ and $SiO_4$ units (R is an alkyl or aryl group), respectively, wherein further silicon units are bonded to the oxygen atoms. "M" units, i.e., $R_3SiO$ unit are terminal units wherein the oxygen atom provides a link to the resin backbone. Similarly, "D" units, i.e., $R_2SiO_2$ units provide linear connectivity across the two oxygen atoms. One well known non-branched and linear polysiloxane is polydimethylsiloxane (PDMS; i.e., $(Me_2SiO)_n$).

Preferably, the silicone resin is a solid at room temperature (e.g., about 25°C). Accordingly, the silicone resin preferably has a melting point of greater than 25°C, preferably greater than 30°C, more preferably greater than 35°C. Preferably, the melting point of the silicone resin is less than 100°C, preferably less than 95°C, less than 90°C, less than 85°C or less than 80°C. Non-branched polysiloxanes such as PDMS typically have lower melting points than silicone resins which are branched. For example, the melting point of PDMS is about -40°C. WO 2011/151711 discloses binding powder in place by treatment with polydimethylsiloxane which forms silica when hydrolysed at sufficiently high temperature.

Similarly, the inventors have found that it is preferable that the silicone resin has a glass transition temperature (Tg) of greater than 30°C, preferably greater than 35°C, and/or less than 100°C, preferably less than 80°C. Without wishing to be bound by theory, the inventors believe that silicone resins which have such melting points and/or glass transition temperatures are particularly suited for the powder coating process, i.e., for effective particulate dispersion across on the monolith article together with the inorganic particles, yet low enough to permit low temperature calcination thereby effectively and efficiently adhering the inorganic particles to the gas-contacting surface of the channel walls.

Preferably, the silicone resin has a molecular weight of greater than 1,000, preferably greater than 2,000, preferably greater than 5,000, preferably greater than 10,000, and/or a molecular weight of less than 500,000, preferably less than 200,000.

As used herein, molecular weight refers to the weight average molecular weight ($M_W$) which may be measured using any conventional means in the art. In some embodiments, particularly those described herein wherein the silicone resin comprises hydroxy functionalities, the molecular weight may be relatively low since the hydrogen bonding provided by the hydroxy functionalities provides the silicone resin with a sufficiently high melting point and/or glass transition temperature. Accordingly, in some embodiments the molecular weight of the silicon resin may be from 1,000 to 10,000, preferably from 1,000 to 5,000, preferably from 1,200 to 3,500, such as from 1,500 to 2,000. Silicone resins having molecular weights below 1,000 are less preferred since they are typically either liquid and not suitable for dry spraying or do not have as much branching as larger molecules which is believed to provide enhanced binding of the inorganic particles to the monolith article.

Nevertheless, the molecular weight of the silicone resin may preferably be from 15,000 to 150,000, preferably from 20,000 to 120,000, preferably from 60,000 to 100,000. Some preferable resins have an Mw of from 8,000 to 15,000, some from 20,000 to 60,000 and others from 80,000 to 120,000.

It is particularly preferred that the silicone resin has the formula $[R_xSiX_yO_z]_n$, wherein R is an alkyl or aryl group, X is a functional group bonded to silicon, and wherein z is more than 1 and less than 2. As will be appreciated, n is large so as to provide an oligomer or polymer necessary for a silicone resin, particularly a resin which is solid at room temperature. Whilst dependent on the molecular mass of the R and X groups, an $M_W$ of greater than 1,000 may be achieved where n is greater than 10, an $M_W$ of greater than 10,000 may be achieved where n is greater than 100 and an $M_W$ of greater than 100,000 may be achieved where n is greater than 1,000. Accordingly, n may preferably be greater than 10, greater than 100, greater than 1,000.

As will be appreciated, R is an alkyl or an aryl bonded to silicon and X is a non-hydrocarbon functional group bonded to silicon. Equally, since silicon is a tetravalent atom, it will be appreciated that x + y + 2z = 4. z is less than 2 since where z = 2, x and y = 0 providing silica (i.e., silicon dioxide; $(SiO_2)_n$). Similarly, z is greater than 1 since where z = 1, x + y = 2 providing a substituted polysiloxane (e.g. $(RXSiO)_n$) consisting of "D" units providing a linear resin (e.g. -O-(SiRX)-O-(SiRX)-O-). One example is polydimethylsiloxane. Accordingly, O refers to oxygen bridging two silicon atoms in the polymeric backbone of the silicone resin.

Preferably, 0 < x + y < 2, preferably 0 < x + y ≤ 1.5, preferably 0 < x + y ≤ 1. Preferably, x, y and/or x + y is greater than 0.1, preferably greater than 0.2. In one preferred embodiment, x + y is 1 providing a silicone resin known generally as a polysilsesquioxane. Preferably, y is less than 1 and/or y is less than x. Even more preferably, 2y ≤ x, preferably 5y ≤ x, preferably 10y ≤ x. In one embodiment, y is 0. For example, y is 0 where the polysilsesquioxane is a polyalkylsilsesquioxane such as polymethylsilsesquioxane $(MeSiO_{3/2})_n$.

Typically, where present, X is one or more of H, hydroxy (OH), Cl and $C_1$-$C_6$ alkoxy, preferably one or more of OH and $C_1$-$C_6$ alkoxy, preferably wherein the $C_1$-$C_6$ alkoxy is selected from methoxy ($OCH_3$) and ethoxy ($OCH_2CH_3$). In a particularly preferred embodiment, X is one or both of OH and ethoxy. However, X is a functional group which can also be a reactive functional group such as aminyl ($NH_2$, $NR_2$), epoxy, acrylate, and vinyl, though these are less preferred since the presence of hydroxy or alkoxy groups is believed to provide more effective cross-linking during calcination. As described above, any oxygen present in the terminal functional group does not contribute to "$O_z$" in the above formula which refers to silicon bridging oxygen atoms.

The inventors have found that the silicone resins described herein provide a coated monolith article with the advantageous benefit of enhanced water tolerance and improved thermal stability. The silicone resin has been found to be particularly advantageous in binding the inorganic particles to the monolith article. Without wishing to be bound by theory, the inventors believe that the branched structure and the physical properties of the silicone resin permit the resin, during the calcination step as described herein, to first melt and begin to cure after having been combined with the inorganic particles on the gas-contacting surface of the channels (either intimately or deposited thereon). As the resin cures, the resin forms additional -Si-O-Si-O-Si- bridges/bonds further increasing its branch-like structure. Additionally, the inventors believe that such bonds may also be formed with the gas-contacting surface (i.e., the monolith article itself) along with the inorganic particles further cementing the particles in place in the article, for example by forming -Si-O-Al- bonds. As the temperature during calcination continues to increase, the R and X groups are oxidised to leave a silica ($SiO_2$) framework. Accordingly, silicon and/or aluminium containing inorganic particles may be preferred, for example, zeolites, calcium aluminate, alumina and/or silica.

Preferably, the silicone resin has a degree of crosslinking of greater than 55%, preferably greater than 60%, more preferably greater than 65%, and/or a degree of crosslinking of less than 85%, preferably less than 80%.

As described herein, the silicon atom(s) of a silicone resin, such as that described by the formula $[R_xSiX_yO_z]$

$_n$, may be in one of four coordination environments in view of the tetravalent nature of silicon, i.e., $SiO(R/X)_3$, $SiO_2(R/X)_2$, $SiO_3(R/X)$ or $SiO_4$ known in the art as "M", "D", "T", and "Q", respectively. Accordingly, the above formula may be described by aMbDcTdQ where $a + b + c + d = 1$ and the degree of crosslinking is defined by $[(a + 2b + 3c + 4d) / 4] * 100$. The relative ratios of the number of silicon atoms in each coordination environment may be determined using standard spectroscopic techniques, for example, multi-nuclear NMR spectroscopy, particularly $^{29}Si$ NMR spectroscopy. Alternatively, for commercially available silicone resins, the degree of crosslinking may be provided in the technical datasheet.

In other words, silicon dioxide ($SiO_2$) is formed entirely of "Q" $SiO_4$ units where each silicon atom is bonded to four connecting oxygen atoms. Accordingly, where d is 1, this gives silicon dioxide a 100% degree of crosslinking. On the other hand, by way of example, PDMS is formed entirely of "D" $Si(Me)_2O_2$. Accordingly, where b is 1, this gives polydimethylsiloxane a 50% degree of crosslinking. Consequently, silicone resins preferably have a degree of crosslinking between these two extremes and comprise a mixture of such units. Accordingly, a silicone resin may preferably comprise (or consist of) MDT units, MTQ units, DTQ units or DT units.

Preferably, R is one or more of $C_1$-$C_6$ alkyl or phenyl group. Due to the oligomeric or polymeric nature of a silicone resin, the number of monomeric units is typically large. There may be numerous instances of both R and X groups such that the silicon resin, as described by a single monomeric unit, may comprise multiple different groups. As described above with regards to the functional group X, X may preferably be both OH and ethoxy. Similarly, R may comprise more than one $C_1$-$C_6$ alkyl and/or phenyl. Accordingly, where R is described by more than one group such as R' and R", the formula of the silicon resin may be $[R'_{x'}R''_{x''}SiX_yO_z]_n$ wherein $x' + x'' = x$. This applies equally to the functional group X.

Preferably, R is one or more of a straight chain or branched alkyl and phenyl, one or more of a straight chain alkyl and phenyl, more preferably one or both of methyl and phenyl. In some preferred embodiments wherein R is both methyl and phenyl, the phenyl to methyl ratio is less than 2, preferably less than 1.5, preferably less than 1, preferably less than 0.5. In some embodiments, R is phenyl. More preferably, R is methyl (i.e., the ratio is 0).

Smaller organic groups such as methyl, methoxy and ethoxy for the R and X groups are particularly preferred since this increases the $SiO_2$ content of the starting silicone resin reducing the weight loss during calcination. Additionally, there is reduced smoking during calcination and loss of volatiles (such as $H_2O$, $CO_2$ and other volatile organics).

Accordingly, it is preferred that the silicon dioxide content of the silicone resin is greater than 50 wt%, preferably greater than 60 wt%, preferably greater than 70 wt%, preferably greater than 80 wt%. The silicon dioxide content may also be referred to as the ash content which is the weight of the product remaining after complete oxidation (in this case the product being silicon dioxide) by weight of the starting silicone resin. For example, the oxidation may be carried out at 1000°C.

Alternatively, the silicone dioxide content may be available from the technical datasheet of suitable commercially available silicone resins. Alternatively, the silicon dioxide content may be calculated on the basis of complete oxidation of silicon to silicon dioxide and the resin chemical formula. By way of example only, polymethylsilsesquioxane $(MeSiO_{3/2})_n$ is about 42.7 wt% silicon, by weight of the silicone resin based on a formula weight of 66.1 and silicon's atomic weight of 28.1. Silicon dioxide has a formula weight of 60.1 which is about 2.1 times greater than that of silicon. Accordingly, the silicon dioxide content of polymethylsilsesquioxane is $2.1 * 42.7 = 89.7$ wt% (i.e., by weight of the silicone resin).

One particularly preferred silicone resin for use in the method of the present invention is a highly cross-linked ethoxylated poly(dimethyl siloxane) having silicon dioxide content of about 82 wt%, and a melting point of from 35°C to 55°C.

Preferably, the inorganic particles and/or silicone resin particles have a $d_{50}$ by volume of greater than 0.2 $\mu$m, preferably greater than 0.5 $\mu$m, and/or less than 50 $\mu$m, preferably less than 25 $\mu$m, preferably less than 20 $\mu$m, preferably less than 15 $\mu$m, preferably less than 10 $\mu$m.

Preferably, the total inorganic oxide coating can be applied to the monolith article in a mass loading of less than 50 g/L, preferably less than 30 g/L. In a preferred embodiment, the total mass loading of the inorganic oxide coating is from 1 g/L to 25 g/L, e.g. from 2 to 20 g/L, or preferably from 3 to 15 g/L. Preferably, the mass loading of the inorganic particles is at least 1 g/L and/or less than 25 g/L. Preferably, the mass loading of the silicone resin is at least 1 g/L and/or less than 25 g/L. In one preferred embodiment, the mass loading of the inorganic particles is from 1 g/L to 15 g/L and/or the mass loading of the silicone resin is from 1 g/L to 15 g/L. By way of example, where the ratio of inorganic particles to silicone resin, by weight, is 1:1, the loading of inorganic particles may be 5 g/L and the loading of the silicone resin may be 5 g/L giving a total loading the inorganic oxide coating of 10 g/L. By way of example, where the ratio is 2: 1, the inorganic particle loading may be 10 g/L and the silicone resin loading 5 g/L giving a total loading of 15 g/L.

In some embodiments, the ratio of inorganic particles to silicone resin in the inorganic oxide coating is from 0.5:1 to 5:1, preferably from 1: 1 to 4:1, e.g., around 2: 1 or 3: 1.

Washcoat Coating

The washcoat coating as herein described can comprise an oxygen storage capacity (OSC) material, an inorganic oxide support, precious metals, and/or rheology modifiers.

"Oxygen storage capacity" refers to the ability of materials used as oxygen storage capacity material in catalysts to store oxygen at lean conditions and to release it at rich conditions.

Examples of OSC materials that can be used in the washcoat coating include $Al_2O_3$, $SiO_2$, $TiO_2$, $CeO_2$, $ZrO_2$, $V_2O_5$, $La_2O_3$, $Nd_2O_3$, $Pr_6O_{11}$, $HfO_2$, and zeolites (e.g. zeolites as herein described). In a preferred embodiment, the OSC material present in the washcoat coating comprises one or more mixed oxides, for example, a mixed oxide of cerium and zirconium, a mixed oxide of cerium, zirconium and aluminium, a mixed oxide of cerium, zirconium and neodymium, a mixed oxide of cerium, zirconium and praseodymium, or a mixed oxide of cerium, zirconium, lanthanum and neodymium. The term "mixed oxide" as used herein generally refers to a mixture of oxides in a single phase, as is conventionally known in the art. In a further preferred embodiment, the washcoat coating comprises one or more OSC materials selected from a mixed oxide of cerium and zirconium, a mixed oxide of cerium, zirconium and neodymium, a mixed oxide of cerium, zirconium, lanthanum and neodymium, or a mixed oxide of cerium, zirconium, lanthanum, hafnium and neodymium.

The amount of the OSC material in the washcoat coating can be from 5 to 50 wt%, preferably from 10 to 30 wt%, relative to the total weight of the washcoat coating.

Examples of the inorganic oxide support can be an oxide of Groups 2, 3, 4, 5, 13 and 14 elements. The inorganic oxide support is preferably a refractory oxide that exhibits chemical and physical stability at high temperatures, such as the temperatures associated with gasoline engine exhaust. The inorganic oxide support can be selected from the group consisting of alumina, silica, titania, and mixed oxides or composite oxides thereof. More preferably, the inorganic oxide support is an alumina. In one embodiment, the inorganic oxide support is gamma-alumina. The gamma-alumina used as the inorganic oxide support preferably has a mean particle size of from 1 to 10 $\mu$m, more preferably from 2 to 8 $\mu$m. In another embodiment, the inorganic oxide support is a nano alumina. The nano alumina used as the inorganic oxide support preferably has a mean particle size of less than 1 $\mu$m.

The inorganic oxide support can be doped with a dopant. The dopant can be selected from the group consisting of La, Sr, Si, Ba, Y, Pr, Nd, Ce, and mixtures thereof. Preferably, the dopant is La, Ba, Nd, or Ce. Most preferably, the dopant is La or Nd. The dopant content in the inorganic oxide support can be from 1 to 30 wt%, preferably from 2 to 25 wt%, more preferably from 3 to 20 wt%.

The amount of the inorganic oxide support in the washcoat coating can be from 2 to 30 wt%, preferably from 5 to 20 wt%, relative to the total weight of the washcoat coating.

Examples of precious metals that can be used in the washcoat coating include platinum group metals (such as Ru, Rh, Pt, Os, Ir and Pd), Ag, Au, In, Re, Ge, Be, Ga, Te, Bi and Hg. In a preferred embodiment, precious metals that can be used in the washcoat coating are selected from the group comprising Pt, Pd and Rh.

The amount of the total precious metals in the washcoat coating can be from 0.005 to 10 wt%, preferably from 0.001 to 5 wt%, more preferably from 0.05 to 3.0 wt%, relative to the total weight of the washcoat coating.

Examples of rheology modifiers that can be used in the washcoat coating include silanes, amines, acids, polysaccharides (such as starch, celluloses, galactomannan gum, xanthan gum, curdlan etc), dispersible celluloses (e.g. Natrosol), TEAOH (tetraethylammonium hydroxide), Dispex, amino acids, beta alanine and ammonia. In a preferred embodiment, the rheology modifiers used in the washcoat coating are selected from polysaccharides and amino acids, e.g. Natrosol and beta alanine.

The washcoat coating can further comprise a $C_2$-$C_6$ aliphatic amino acid. Suitable $C_2$-$C_6$ aliphatic amino acids include 3-amino-propionic acid, L-alanine, glycine, serine, L-valine, and the like. Preferably the $C_2$-$C_6$ aliphatic amino acid is an amino acid having the formula $HO_2C$-$(CH_2)_n$-$NH_2$, wherein n is from 1-5, preferably from 1 to 3. One preferred amino acid is 3-amino-propionic acid (n = 2).

The amount of the $C_2$-$C_6$ aliphatic amino acid in the washcoat coating can be from 1 to 50% wt%, preferably from 2 to 40 wt%, more preferably from 3 to 30 wt% or 5 to 25 wt%, relative to the mass of solids in the washcoat coating.

The washcoat coating can further comprise additional components, such as metal hydroxides, metal phosphates, metal carbonates, or mixtures thereof. The metal hydroxide may be selected from magnesium hydroxide, calcium hydroxide, strontium hydroxide and barium hydroxide. The metal phosphate may be selected from magnesium phosphate, calcium phosphate, strontium phosphate and barium phosphate. The metal carbonate may be selected from magnesium carbonate, calcium carbonate, strontium carbonate and barium carbonate. In a preferred embodiment, the washcoat coating comprises barium hydroxide.

In a preferred embodiment, the washcoat coating comprises ceria zirconia, alumina, precious metals selected from Pd, Pt or Rh, barium hydroxide, a rheology modifier and a $C_2$-$C_6$ aliphatic amino acid (e.g. 3-amino-propionic acid). The washcoat coating can optionally additionally comprise lanthanum oxide and/or neodymium oxide.

Preferably, the total washcoat loading is from 35 to 150 g/L, preferably from 40 to 125 g/L, e.g., from 50 to 100 g/L, from 60 to 90 g/L, or from 65 to 85 g/L. In an alternative embodiment, the total washcoat loading is about 70, about 75 or about 80 g/L.

The washcoat coating can have a pH of between 4 and 7, e.g. between 4.5 and 6.5, preferably between 5 and 6.

The washcoat coating can have a conductivity of 1 to 100 mS, e.g. from 2 to 50 mS, 3 to 30 mS, 5 to 25 mS or 10 to 20 mS. In a preferred embodiment, the conductivity is from 1 to 30 mS, e.g. from 5 to 25 mS, from 8 to 22 mS, from 10 to 20 mS, or from 12 to 18 mS.

Conductivity can be measured using a Cole Parmer conductivity meter at 20 °C.

The washcoat coating can have a viscosity of between 0-5,000 cPs, e.g. from 1 to 3,000 cPs, from 2 to 2,000 cPs, from 3 to 1,000 cPs, from 4 to 500 cPs or from 5 to 300 cPs. In a preferred embodiment, the viscosity is between 5 and 250 cPs, between 10 and 200 cPs, between 15 and 180 cPs, between 25 and 150 cPs, between 50 and 120 cPs, or between 60 and 100 cPs. In a more preferred embodiment, the washcoat coating has a viscosity of between 5 and 200 cPs, even more preferably between 25 and 120 cPs, e.g. between 50 and 100 cPs.

The viscosity can be measured at 20 °C on a Brookfield RV DVII+Extra Pro viscometer using a SC4-27 spindle at 50 rpm spindle speed.

The total washcoat coating can have a $d_{90}$ (by volume) of between 0.1 $\mu$m and 100 $\mu$m, preferably between 0.2 $\mu$m and 50 $\mu$m, between 0.5 and 40 $\mu$m, between 1 $\mu$m and 30 $\mu$m, between 1.5 $\mu$m and 20 $\mu$m, between 2 $\mu$m and 10 $\mu$m, between 3 $\mu$m and 8 $\mu$m. In a preferred embodiment, the total washcoat coating has a $d_{90}$ (by volume) of between 0.1 and 10 $\mu$m, between 0.5 and 9 $\mu$m, between 1 $\mu$m and 8 $\mu$m, between 1.5 $\mu$m and 7.5 $\mu$m, between 2 $\mu$m and 7 $\mu$m, between 2.5 $\mu$m and 6 $\mu$m, between 3 $\mu$m and 5.9 $\mu$m. In a more preferred embodiment, the zeolite has a $d_{90}$ (by volume) of between 4 and 5.8 $\mu$m, e.g. about 5.5 $\mu$m.

As used herein, the term "$d_{90}$ (by volume)" refers to a $d_{90}$ (by volume) measurement as measured by a Malvern Mastersizer® 3000 with Aero s dispersion unit, available from Malvern Panalytical Ltd, Malvern, UK. Dispersion conditions: Air pressure = 2 barg, feed rate = 65%, hopper gap = 1.2mm. Refractive index and absorbtion parameters set in accordance with instructions provided in the Malvern Mastersizer® 3000 User Manual.

Coated Monolith Article

The monolith article comprises different coating layers, said coating layers are distinct from one another. The monolith article can comprise two or more layers (e.g. two or more distinct layers).

In one embodiment, the monolith article comprises two coatings, an inorganic coating layer (e.g. the inorganic coating layer as herein described) and a washcoat coating layer (e.g. the washcoat coating layer as herein described). In a preferred embodiment, the inorganic coating layer (e.g. the inorganic coating layer as herein described) is coated directly onto the monolith article (i.e. there are no intervening layers between the monolith article and the inorganic oxide coating) on the inlet end of the article. In a preferred embodiment, the washcoat coating layer (e.g. the washcoat coating layer as herein described) is coated directly onto the monolith article (i.e. there are no intervening layers between the monolith article and the washcoat coating layer) on the outlet end of the article.

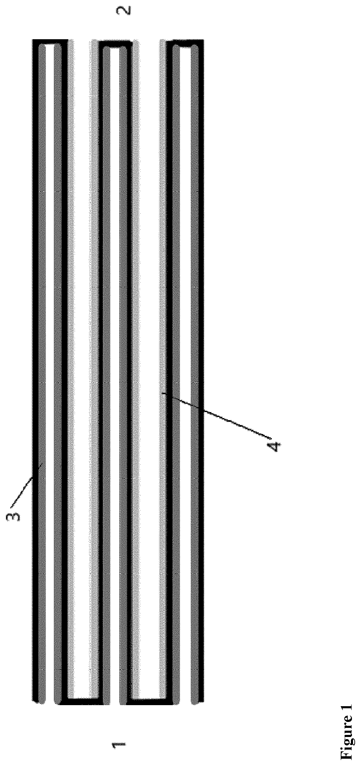

**Figure 1** shows one embodiment of the invention. The article is made from a number of channels and has an inlet end (1) and an outlet end (2). The inlet end has an inorganic oxide coating applied (3) and the outlet end has a washcoat coating applied (4). The inorganic oxide coating and washcoat coating are depicted as covering 100% of the length of the article in Figure 1, but as would be appreciated by a person skilled in the art, the inorganic coating can be applied such that it extends from 80-100% of the length of the article from the inlet end (preferably from 90-100%, or about 100% of the length of the article from the inlet end). In an additional or alternative embodiment, the washcoat coating can be applied such that it extends from 60-100% of the length of the article from the outlet end (preferably from 65-95%, e.g. from 70-90% or 75-80% of the length of the article from the outlet end).

In an alternative embodiment, the inorganic coating layer (e.g. the inorganic coating layer as herein described) is coated directly onto the monolith article (i.e. there are no intervening layers between the monolith article and the inorganic oxide coating) and the washcoat coating layer (e.g. the washcoat coating layer as herein described) is coated directly onto said inorganic coating layer (i.e. there are no intervening layers between the inorganic coating layer and the washcoat coating layer).

Inlet End

The inlet end of the monolith article (e.g. the inlet end as herein described) comprises (e.g. consists of) an inorganic oxide coating.

In a preferred embodiment, the inorganic oxide coating of the inlet end is coated directly onto the monolith article (i.e., there are no intervening layers between the monolith article and the inorganic oxide coating).

Outlet End

The outlet end of the monolith article (e.g. the outlet end as herein described) comprises (e.g. consists of) a washcoat coating.

In a preferred embodiment, washcoat coating of the outlet end is coated directly onto the monolith article (i.e., there are no intervening layers between the monolith article and the washcoat coating).

Method of Forming the Coated Monolith Article

The invention also relates to a method of forming a coating monolith article (e.g. a coated monolith article as described herein), said method comprising:

i) providing a monolith article which has an inlet end and an outlet end,
ii) applying an inorganic oxide coating to the inlet end,
iii) optionally drying and/or calcining the inorganic coating,
iv) applying a washcoat coating to the outlet end,
v) optionally drying and/or calcining the resulting article.

The inorganic oxide coating (e.g. the inorganic oxide coating of step ii)) is applied to the monolith article. In a preferred embodiment, the inorganic oxide coating is applied in a spraying step. In a particularly preferred embodiment, the inorganic coating is applied in a spraying step from the inlet end only.

In one embodiment, the inorganic oxide coating is applied in a spraying step which comprises a first spraying step wherein the inorganic particles are sprayed as a first dry particulate aerosol to form an inorganic particle layer and in a second spraying step the silicone resin is then sprayed onto the inorganic particle layer as a second dry particulate aerosol. Accordingly, the inorganic particles are sprayed before the silicone resin is separately sprayed on article coated with the inorganic particles. In a particularly preferred embodiment, the inorganic particles and silicone resin are applied in a spraying step from the inlet end only.

Even more preferably, a mixture of the inorganic particles and silicone resin is sprayed as a dry particulate aerosol to form the inorganic oxide coating layer. Accordingly, an intimate mixture of the inorganic particles and silicone resin is applied and provides enhanced adhesion of the inorganic particles to the monolith article upon calcination of the silicone resin. In a particularly preferred embodiment, the mixture of inorganic particles and silicone resin is sprayed as a dry particulate aerosol from the inlet end only.

Where a mixture of the inorganic particles and silicone resin is sprayed as a dry particulate aerosol to form the inorganic oxide coating layer (preferably wherein the dry particulate composition consists of the inorganic particles and silicone resin), in the mixture, the ratio of inorganic particles to silicone resin, by weight, is preferably greater than 0.5 (in other words greater than 0.5:1), preferably greater than 0.7, preferably greater than 0.9, and/or less than 10, preferably less than 8, preferably less than 5. For example, the ratio may preferably be about 2 or about 3. Preferably, the ratio is from 1 to 4, preferably from 2 to 4.5, preferably from 2.5 to 4, preferably from 2.5 to 3.5, e.g., about 3.

The method can further comprise calcining the inorganic oxide coating layer prior to the application of the washcoat coating. That is, the method comprises calcining the monolithic article having the inorganic particles and silicone resin sprayed thereon on the gas-contacting surfaces of the plurality of channels. Preferably, the step of calcining comprises heating to a temperature of at least 200°C, preferably at least 300°C, more preferably at least 400°C, and/or a temperature of at most 600°C, preferably at most 550°C, more preferably at most 530°C. Accordingly, calcining preferably comprises heating to a temperature of from 200°C to 600°C, preferably from 300°C to 550°C, preferably from 400°C to 530°C, more preferably from 400°C to 500°C, even more preferably from 400°C to 450°C.

In a preferred embodiment, the inorganic oxide coating layer is dried but not calcined prior to the application of the washcoat coating. The inventors have surprisingly found that it is not essential to calcine the inorganic oxide coating layer before the application of the washcoat. This can reduce the amount of energy needed to produce the product of the invention. Therefore, in a preferred embodiment, the inorganic oxide coating layer is not calcined prior to the application of the washcoat coating.

The inorganic oxide coating layer can be applied such that it extends from 80-100% of the length of the substrate from the inlet end. In a preferred embodiment, the inorganic oxide coating layer extends from 90 to 99% of the length of the substrate from the inlet end, more preferably from 95 to 98%, e.g., around 100%, around 95% or around 90%.

The washcoat coating (e.g. the washcoat coating as herein described, particularly the washcoat coating of step iv)) is applied to the monolith article at the outlet end of the monolith article. The washcoat coating can be applied to the outlet end of the monolith article in a single dose or in multiple doses (e.g. 2, 3, 4 or 5 doses). In a preferred embodiment, the washcoat coating is applied to the monolith article in a single dose or two doses, most preferably in a single dose. When multiple doses of washcoat are applied to the monolith article, the same or different washcoat can be applied each time, preferably the same washcoat is applied to the monolith article.

The washcoat coating (e.g. the washcoat coating of step iv)) can be applied such that it extends from 60-100% of the length of the article from the outlet end. In a preferred embodiment, the washcoat coating extends from 65 to 95% of the length of the substrate from the outlet end, more preferably from 70 to 90%, from 75 to 80%, e.g., around 80%, around 75% or around 70%.

The washcoat coating (e.g. the washcoat coating of step iv)) can be applied using any convention methods, for example, an Automated Inversion Depositor (AID) process or Precision Coating (PC) process. The AID process involves using a piston to push the washcoat into the filter, the part is flipped and then the washcoat soaks into the wall of the substrate. The PC process involves using a showerhead to apply the correct dose quantity, the washcoat is drawn into the part by gravity and/or vacuum, allowing the washcoat to soak into the wall of the substrate. In a preferred embodiment, the PC process is used to apply the washcoat to the substrate. The washcoat coating can be applied by dosing the washcoat through the outlet end and:

i) applying vacuum to said washcoat, and/or
ii) applying positive pressure to said washcoat, and/or
iii) allowing said washcoat to dose by capillary action,

to allow it to coat at least a portion of the channels with said washcoat.

Preferably, the step of calcining comprises heating to a temperature of at least 200°C, preferably at least 300°C, more preferably at least 400°C, and/or a temperature of at most 600°C, preferably at most 550°C, more preferably at most 530°C. Accordingly, calcining preferably comprises heating to a temperature of from 200°C to 600°C, preferably from 300°C to 550°C, preferably from 400°C to 530°C, more preferably from 400°C to 500°C, even more preferably from 400°C to 450°C.

Such temperatures have been found as most suitable for forming an effective binder which provides the coated monolith article with its advantageous water tolerance. Such temperatures are particularly advantageous when the monolith article is a catalyst article, such as a catalytic wall-flow filter, since these temperatures allow for calcination of the silicone resin into a cross-linked silicon dioxide without negatively impacting the catalytic efficiency (i.e., without degrading the catalyst article). It is believed that linear siloxanes such as PDMS, not only do not provide the required branching to effectively bind the inorganic particles and adhere to the article, complete degradation to $SiO_2$ requires temperatures in excess of 550°C or even 600°C. Ideally, calcination temperatures are kept as low as possible to reduce the likelihood of affecting catalytic activity of any catalyst present in the monolithic article.

Exhaust Gas System and Method

According to a further aspect there is provided an exhaust gas system comprising the coated monolith article as described herein or made by the method as described herein, and, optionally, a combustion engine. The combustion engine can be a diesel engine, a lean-burn gasoline engine or an engine powered by liquid petroleum gas or natural gas. Preferably, the combustion engine is a diesel engine. The coated monolith article can be arranged downstream of the engine to treat the exhaust gas emitted therefrom.

According to a yet further aspect of the invention, there is provided a method for the treatment of an exhaust gas, the method comprising contacting the exhaust gas with the coated monolith article as described herein or made by the method as described herein.

Although preferred embodiments of the invention have been described herein in detail, it will be understood by those skilled in the art that variations may be made thereto without departing from the scope of the invention or of the appended claims.

The invention will now be described further in relation to the following non-limiting examples and figures.

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of' (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

As used herein, the term "g/L" (grams per litre) refers to the mass of powder divided by the volume of the filter.

The foregoing detailed description has been provided by way of explanation and illustration, and is not intended to limit the scope of the appended claims. Many variations of the presently preferred embodiments illustrated herein will be apparent to one of ordinary skill in the art, and remain within the scope of the appended claims and their equivalents.

**EXAMPLES**

Example 1

Preparation of comparative example 1

A monolith article with an inlet end and outlet end was provided. 100% of the washcoat coating was dosed via a depositor from the outlet end, the article was dried in a dynamic drying oven at 115 °C and then calcined at 500 °C. The inorganic oxide coating layer was applied to the inlet and the resulting coated article calcined at 500 °C.

Preparation of comparative example 2

A monolith article with an inlet end and outlet end was provided. 50% of the washcoat coating was dosed via a depositor from the outlet end, the article was dried in a dynamic drying oven at 115 °C and then a further 50% of the washcoat coating was then dosed via a depositor from the outlet end. The article was then dried in a dynamic drying oven at 115 °C and then calcined at 500 °C. The inorganic oxide coating layer was applied to the inlet and the resulting coated article calcined at 500 °C.

Preparation of sample 3 according to the invention

A monolith article with an inlet end and outlet end was provided. The inorganic oxide coating layer was applied to the inlet, the article was dried in a dynamic drying oven at 115 °C. 50% of the washcoat coating was dosed via a depositor from the outlet end, the article was dried in a dynamic drying oven at 115 °C and then a further 50% of the washcoat coating was then dosed via a depositor from the outlet end. The article was then dried in a dynamic drying oven at 115 °C and calcined at 500 °C.

Example 2

The filtration efficiency was calculated for comparative examples 1 and 2, and sample 3. On a DPG (diesel particulate generator), the soot is measured before and after the filter and the filtration efficiency is calculated using the equation:

$$\textit{Filtration efficiency = 1 – (soot post filter/soot pre filter)}$$

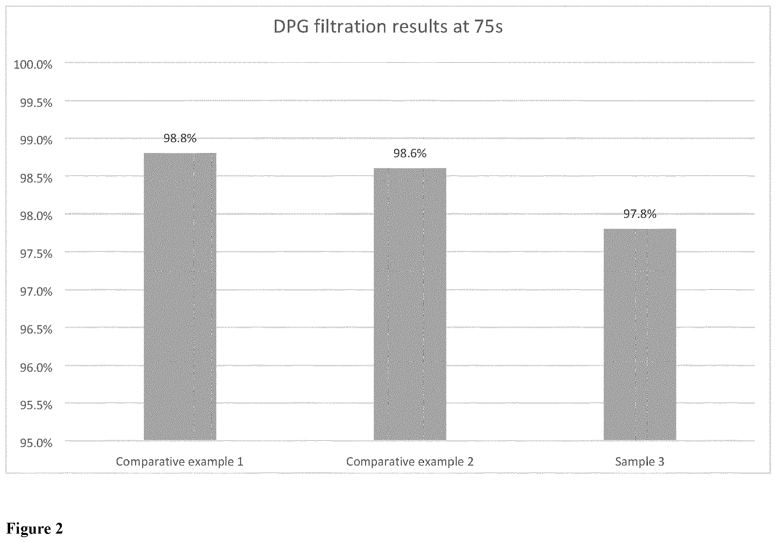

The results are shown in Figure 2.
Figure 2 shows that the results for sample 3 according to the invention has essentially the same filtration efficiency compared to comparative examples 1 and 2, demonstrating that the current invention demonstrates comparable filtration efficiency and can be used as a viable alternative to comparative examples 1 and 2.

Example 3

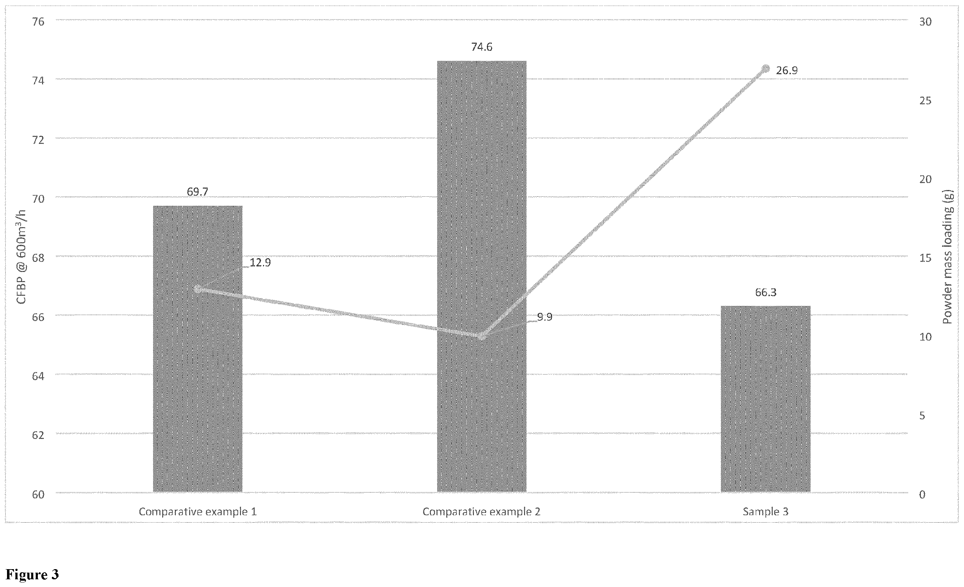

The mass loading and cold flow back pressure were calculated for comparative examples 1 and 2, and sample 3. Mass loading is measured before and after loading on a balance. Cold flow back pressure is measured by flowing 600 m$^3$/h air and measuring the pressure drop of this in mbar. The results are shown in Figure 3.
Figure 3 shows that sample 3 according to the invention has essentially the same cold flow back pressure compared to comparative examples 1 and 2, demonstrating that the current invention demonstrates comparable cold flow back pressure and can be used as a viable alternative to comparative examples 1 and 2. In addition, essentially the same inorganic coating was able to be loaded onto sample 3 than comparative examples 1 and 2, resulting in a similar mass loading of catalyst for similar cold flow back pressures.

Example 4

Samples were evaluated fresh on an engine for filtration efficiency by the VW RDE Max drive cycle evaluation. Samples were tested behind a reference flow through catalyst. The filtration efficiency is calculated using the equation below.

$$Filtration\ efficiency = 1 - \frac{Particulate\ number\ emitted\ with\ GPF}{Particulate\ number\ emitted\ without\ GPF}$$

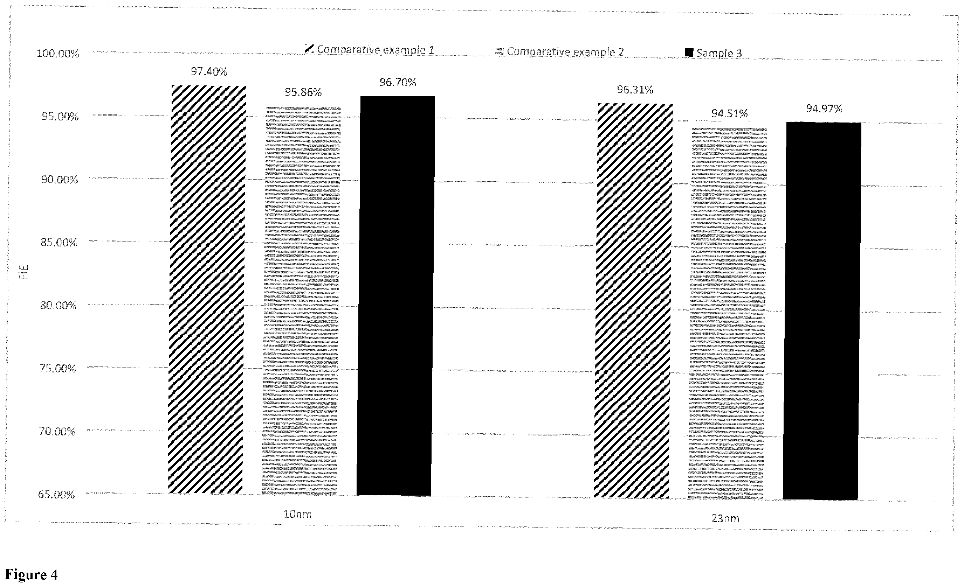

The results are shown in Figure 4. Measurements were taken for particulate matter at greater than 10nm (left) and greater than 23nm (right).

Figure 4 shows that sample according to the invention has essentially the filtration efficiency compared to comparative examples 1 and 2, demonstrating that the current invention demonstrates comparable filtration efficiency and can be used as a viable alternative to comparative examples 1 and 2.

**Claims**

1.   A monolith article comprising an inlet end and an outlet end, and a coating, said coating comprising:

a) an inorganic oxide coating applied to the inlet end of the article, and
b) a washcoat coating applied to the outlet end of the article.

2.   The monolith article according to claim 1, wherein the monolith article is a monolith filter, preferably a wall-flow filter, and/or a catalyst article, preferably a catalytic wall-flow filter.

3.   The monolith article according to any preceding claim, wherein the inorganic oxide coating comprises inorganic particles (e.g. inorganic particles which comprise an aluminosilicate zeolite), and a silicone resin,

preferably wherein the inorganic particles comprise an aluminosilicate zeolite selected from the group comprising AEI, BEA, CHA, FAU (e.g. zeolite Y) and MFI, and/or
wherein the total inorganic oxide coating is present in a mass loading of between 1-25 g/L, e.g. from 2-20 g/L, preferably between 3-15 g/L.

4.   The monolith article according to claim 3, wherein the ratio of inorganic particles to silicone resin in the inorganic oxide coating is from 0.5:1 to 5:1, preferably from 1:1 to 4:1, e.g. around 2:1 or 3:1.

5.   The monolith article according to any preceding claim, wherein the washcoat coating comprises ceria zirconia, alumina, precious metals selected from Pd, Pt or Rh, barium hydroxide, a rheology modifier and a $C_2$-$C_6$ aliphatic amino acid (e.g. 3-amino-propionic acid), and/or wherein the total washcoat loading is from 35 to 150 g/L, preferably from 40 to 125 g/L, e.g., from 50 to 100 g/L, from 60 to 90 g/L, or from 65 to 85 g/L.

6.   A method of forming a coated monolith article (e.g. the coated monolith article as claimed in any preceding claim), said method comprising:

i) providing a monolith article which has an inlet end and an outlet end,
ii) applying an inorganic oxide coating to the inlet end,
iii) optionally drying and/or calcining the inorganic coating,
iv) applying a washcoat coating to the outlet end,
v) optionally drying and/or calcining the resulting article.

7.   A method of claim 6, wherein the washcoat coating is applied such that it extends from 60-100% of the length of the article from the outlet end, preferably from 65-95%, e.g., from 70-90% or 75-80% of the length of the article from the outlet end.

8.   The method of any one of claims 6-7, wherein the washcoat loading is applied to the monolith article at the outlet end of the monolith article in a single dose or in multiple doses, preferably in a single dose or two doses.

9.   The method of any one of claims 6-8, wherein a mixture of inorganic particles and silicone resin is sprayed as a dry particulate aerosol to from the inorganic oxide coating.

10. The method of any one of claims 6-9, wherein the inorganic oxide coating comprises inorganic particles (e.g., inorganic particles which comprise an aluminosilicate zeolite), and a silicone resin, preferably wherein the inorganic particles comprise an aluminosilicate zeolite selected from the group comprising AEI, BEA, CHA, FAU (e.g. zeolite Y) and MFI.

11. The method of any one of claims 6-10, wherein the silicone resin has a molecular weight of greater than 1,000, preferably greater than 2,000, preferably greater than 5,000, preferably greater than 10,000, and/or a molecular weight of less than 500,000, preferably less than 200,000.

12. The method of any one of claims 6-11, wherein the silicon resin has the formula $[R_xSiX_yO_z]_n$, wherein R is an alkyl or aryl, X is a functional group bonded to silicon and z is more than 1 and less than 2, and preferably: y is less than 1, and/or y is less than x.

13. The method of any one of claims 6-12, wherein the silicone resin has a degree of crosslinking of greater than 55%, preferably greater than 60%, more preferably greater than 65%, and/or a degree of crosslinking of less than 85%, preferably less than 80%.

14. An exhaust gas system comprising the coated monolith article as claimed in any one of claims 1-5, or made by the method of any one of claims 6-13, and, optionally, a combustion engine.

15. A method for the treatment of an exhaust gas, the method comprising contacting the exhaust gas with the coated monolith article as claimed in any one of claims 1-5, or made by the method of any one of claims 6-13.

Figure 1

Figure 2

Figure 3

Figure 4

Europäisches
Patentamt

European
Patent Office

Office européen
des brevets

# EUROPEAN SEARCH REPORT

Application Number

EP 23 15 1699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/186229 A1 (PHILLIPS PAUL RICHARD [GB] ET AL) 26 July 2012 (2012-07-26) | 1,2,5-8, 14,15 | INV.<br>B01D53/92 |
| Y | * paragraphs [0003], [0015] – [0018], [0031], [0037], [0038], [0043]; figure 2a; example 1 * | 3,4,9-13 | B01D46/24<br>B01J37/02<br>B01D53/94 |
| X | WO 2018/172930 A1 (JOHNSON MATTHEY PLC [GB]; BURGESS GARRY ADAM [GB]) 27 September 2018 (2018-09-27) | 1,2,5-8, 14,15 | |
| Y | * page 3, line 17 – page 4, line 32; figures 1,2; example 1 * | 3,4,9-13 | |
| X | WO 2021/154701 A1 (BASF CORP [US]) 5 August 2021 (2021-08-05) * page 1, lines 3-7; example 9 * | 1-15 | |
| X | WO 2011/080525 A1 (JOHNSON MATTHEY PLC [GB]; CHANDLER GUY RICHARD [GB] ET AL.) 7 July 2011 (2011-07-07) | 1-3,5-8, 14,15 | |
| Y | * page 3, paragraph 6 – page 4, paragraph 1; example 1 * | 4,9-13 | TECHNICAL FIELDS SEARCHED (IPC) |
| X | WO 2009/100097 A2 (BASF CATALYSTS LLC [US]; WEI JUNMEI [US] ET AL.) 13 August 2009 (2009-08-13) | 1-3,5-8, 14,15 | B01D<br>B01J |
| Y | * example 1 * | 4,9-13 | |
| E | EP 4 140 581 A1 (JOHNSON MATTHEY PLC [GB]) 1 March 2023 (2023-03-01) * paragraphs [0001], [0012] – [0015], [0022], [0024], [0028], [0031], [0034], [0042], [0045], [0050], [0077] – [0080]; examples B1, B2 * | 1-15 | |
| Y | US 2012/117953 A1 (ANDERSEN PAUL JOSEPH [US] ET AL) 17 May 2012 (2012-05-17) | 3,4,9-13 | |
| A | * paragraphs [0002], [0033], [0078], [0079] * | 1,2,5-8, 14,15 | |

The present search report has been drawn up for all claims

| Place of search | Date of completion of the search | Examiner |
|---|---|---|
| The Hague | 21 June 2023 | Howe, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

**Application Number**

**EP 23 15 1699**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

    see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

    1-15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

**EP 23 15 1699**

The Search Division considers that the present European patent application does not comply with the requirements of unity of invention and relates to several inventions or groups of inventions, namely:

```
1. claims: 1-15 (partially)

       subject-matter of claims 1-15 as far as it relates to a
       "monolith filter" and the "inorganic oxide coating"
       comprises inorganic particles and a silicone resin.
                           ---

2. claims: 1-15 (partially)

       subject-matter of claims 1-15 as far as it relates to a
       "catalysed article" and the "inorganic oxide coating"
       comprises inorganic particles and a silicone resin.
                           ---

3. claims: 1-15 (partially)

       subject-matter of claims 1-15 as far as it relates to a
       "monolith filter" and the "total inorganic oxide coating" is
       present in a mass loading of 1-25g/L.
                           ---

4. claims: 1-15 (partially)

       subject-matter of claims 1-15 as far as it relates to a
       "catalysed article" and the "total inorganic oxide coating"
       is present in a mass loading of 1-25g/L.
                           ---
```

## ANNEX TO THE EUROPEAN SEARCH REPORT
## ON EUROPEAN PATENT APPLICATION NO.

EP 23 15 1699

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | Publication date | Patent family member(s) | Publication date |
|---|---|---|---|
| US 2012186229 A1 | 26-07-2012 | BR 112014002129 A2 | 21-02-2017 |
| | | CN 103781532 A | 07-05-2014 |
| | | EP 2736628 A1 | 04-06-2014 |
| | | JP 6127046 B2 | 10-05-2017 |
| | | JP 2014528350 A | 27-10-2014 |
| | | KR 20140064796 A | 28-05-2014 |
| | | RU 2014107749 A | 10-09-2015 |
| | | US 2012186229 A1 | 26-07-2012 |
| | | US 2014227155 A1 | 14-08-2014 |
| | | WO 2013014467 A1 | 31-01-2013 |
| WO 2018172930 A1 | 27-09-2018 | BR 112019019548 A2 | 22-04-2020 |
| | | CN 110573236 A | 13-12-2019 |
| | | DE 102018106415 A1 | 20-09-2018 |
| | | EP 3600620 A1 | 05-02-2020 |
| | | GB 2562160 A | 07-11-2018 |
| | | JP 7110224 B2 | 01-08-2022 |
| | | JP 2020514039 A | 21-05-2020 |
| | | KR 20190126903 A | 12-11-2019 |
| | | RU 2019133124 A | 21-04-2021 |
| | | US 2018264446 A1 | 20-09-2018 |
| | | WO 2018172930 A1 | 27-09-2018 |
| WO 2021154701 A1 | 05-08-2021 | BR 112022014729 A2 | 11-10-2022 |
| | | CN 115003411 A | 02-09-2022 |
| | | EP 4096822 A1 | 07-12-2022 |
| | | JP 2023512983 A | 30-03-2023 |
| | | KR 20220128628 A | 21-09-2022 |
| | | WO 2021154701 A1 | 05-08-2021 |
| WO 2011080525 A1 | 07-07-2011 | AR 081146 A1 | 04-07-2012 |
| | | AU 2011203392 A1 | 19-07-2012 |
| | | BR 112012016574 A2 | 12-04-2016 |
| | | CN 102781586 A | 14-11-2012 |
| | | DE 102011002449 A1 | 08-03-2012 |
| | | DK 2521618 T3 | 18-11-2013 |
| | | EP 2521618 A1 | 14-11-2012 |
| | | EP 2659976 A1 | 06-11-2013 |
| | | EP 2889083 A1 | 01-07-2015 |
| | | GB 2477602 A | 10-08-2011 |
| | | GB 2487847 A | 08-08-2012 |
| | | HK 1178482 A1 | 13-09-2013 |
| | | JP 5646649 B2 | 24-12-2014 |
| | | JP 5883909 B2 | 15-03-2016 |
| | | JP 2013516307 A | 13-05-2013 |
| | | JP 2015062896 A | 09-04-2015 |

EPO FORM P0459

For more details about this annex : see Official Journal of the European Patent Office, No. 12/82

page 1 of 4

## ANNEX TO THE EUROPEAN SEARCH REPORT
## ON EUROPEAN PATENT APPLICATION NO.

EP 23 15 1699

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | | | Publication date | Patent family member(s) | | | Publication date |
|---|---|---|---|---|---|---|---|
| | | | | KR | 20120105554 | A | 25-09-2012 |
| | | | | MY | 159963 | A | 15-02-2017 |
| | | | | PL | 2521618 | T3 | 31-01-2014 |
| | | | | RU | 2012133433 | A | 20-02-2014 |
| | | | | RU | 2014151995 | A | 27-06-2015 |
| | | | | SG | 182338 | A1 | 30-08-2012 |
| | | | | US | 2011268624 | A1 | 03-11-2011 |
| | | | | US | 2014186232 | A1 | 03-07-2014 |
| | | | | US | 2016325272 | A1 | 10-11-2016 |
| | | | | WO | 2011080525 | A1 | 07-07-2011 |
| | | | | ZA | 201204800 | B | 25-09-2013 |
| WO 2009100097 | A2 | | 13-08-2009 | AR | 070342 | A1 | 31-03-2010 |
| | | | | BR | PI0908461 | A2 | 15-12-2015 |
| | | | | CN | 101970817 | A | 09-02-2011 |
| | | | | EP | 2318673 | A2 | 11-05-2011 |
| | | | | EP | 3536919 | A1 | 11-09-2019 |
| | | | | JP | 5689685 | B2 | 25-03-2015 |
| | | | | JP | 2011525579 | A | 22-09-2011 |
| | | | | KR | 20100125291 | A | 30-11-2010 |
| | | | | PL | 2318673 | T3 | 31-03-2020 |
| | | | | US | 2009193796 | A1 | 06-08-2009 |
| | | | | WO | 2009100097 | A2 | 13-08-2009 |
| EP 4140581 | A1 | | 01-03-2023 | EP | 4140581 | A1 | 01-03-2023 |
| | | | | US | 2023076492 | A1 | 09-03-2023 |
| | | | | WO | 2023026022 | A1 | 02-03-2023 |
| US 2012117953 | A1 | | 17-05-2012 | BR | 112012019009 | A2 | 12-04-2016 |
| | | | | BR | 112012019018 | A2 | 04-08-2020 |
| | | | | BR | 112012019020 | A2 | 27-03-2018 |
| | | | | BR | 112012019030 | A2 | 13-03-2018 |
| | | | | BR | 112012019036 | A2 | 13-03-2018 |
| | | | | CN | 102811797 | A | 05-12-2012 |
| | | | | CN | 102811798 | A | 05-12-2012 |
| | | | | CN | 102821836 | A | 12-12-2012 |
| | | | | CN | 102834165 | A | 19-12-2012 |
| | | | | CN | 102869429 | A | 09-01-2013 |
| | | | | CN | 104759275 | A | 08-07-2015 |
| | | | | CN | 107008261 | A | 04-08-2017 |
| | | | | DE | 102011010103 | A1 | 04-08-2011 |
| | | | | DE | 102011010104 | A1 | 04-08-2011 |
| | | | | DE | 102011010105 | A1 | 04-08-2011 |
| | | | | DE | 102011010106 | A1 | 04-08-2011 |
| | | | | DE | 102011010107 | A1 | 04-08-2011 |
| | | | | DE | 202011110610 | U1 | 02-07-2015 |

EPO FORM P0459

For more details about this annex : see Official Journal of the European Patent Office, No. 12/82

page 2 of 4

## ANNEX TO THE EUROPEAN SEARCH REPORT
## ON EUROPEAN PATENT APPLICATION NO.

**EP 23 15 1699**

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | Publication date | Patent family member(s) | | Publication date |
|---|---|---|---|---|
| | | EP | 2531277 A1 | 12-12-2012 |
| | | EP | 2531278 A1 | 12-12-2012 |
| | | EP | 2531279 A1 | 12-12-2012 |
| | | EP | 2531280 A1 | 12-12-2012 |
| | | EP | 2539050 A1 | 02-01-2013 |
| | | GB | 2477626 A | 10-08-2011 |
| | | GB | 2477628 A | 10-08-2011 |
| | | GB | 2477630 A | 10-08-2011 |
| | | GB | 2479807 A | 26-10-2011 |
| | | GB | 2479808 A | 26-10-2011 |
| | | GB | 2511706 A | 10-09-2014 |
| | | HU | E026104 T2 | 30-05-2016 |
| | | HU | E026281 T2 | 30-05-2016 |
| | | HU | E027305 T2 | 28-10-2016 |
| | | HU | E027335 T2 | 28-09-2016 |
| | | JP | 5782050 B2 | 24-09-2015 |
| | | JP | 5784042 B2 | 24-09-2015 |
| | | JP | 5847094 B2 | 20-01-2016 |
| | | JP | 5847095 B2 | 20-01-2016 |
| | | JP | 6123095 B2 | 10-05-2017 |
| | | JP | 6312361 B2 | 18-04-2018 |
| | | JP | 6383683 B2 | 29-08-2018 |
| | | JP | 6582078 B2 | 25-09-2019 |
| | | JP | 2013517934 A | 20-05-2013 |
| | | JP | 2013517935 A | 20-05-2013 |
| | | JP | 2013517936 A | 20-05-2013 |
| | | JP | 2013518703 A | 23-05-2013 |
| | | JP | 2013521996 A | 13-06-2013 |
| | | JP | 2015077597 A | 23-04-2015 |
| | | JP | 2015077598 A | 23-04-2015 |
| | | JP | 2015145008 A | 13-08-2015 |
| | | JP | 2016064411 A | 28-04-2016 |
| | | JP | 2018118248 A | 02-08-2018 |
| | | KR | 20120125307 A | 14-11-2012 |
| | | KR | 20120125336 A | 14-11-2012 |
| | | KR | 20120125337 A | 14-11-2012 |
| | | KR | 20120130327 A | 30-11-2012 |
| | | KR | 20120139726 A | 27-12-2012 |
| | | KR | 20170094462 A | 17-08-2017 |
| | | KR | 20180027618 A | 14-03-2018 |
| | | KR | 20180077344 A | 06-07-2018 |
| | | RU | 2505355 C1 | 27-01-2014 |
| | | RU | 2604231 C1 | 10-12-2016 |
| | | RU | 2012137242 A | 10-03-2014 |
| | | RU | 2012137278 A | 10-03-2014 |
| | | RU | 2012137280 A | 10-03-2014 |

EPO FORM P0459

For more details about this annex : see Official Journal of the European Patent Office, No. 12/82

**page 3 of 4**

## ANNEX TO THE EUROPEAN SEARCH REPORT
## ON EUROPEAN PATENT APPLICATION NO.

EP 23 15 1699

This annex lists the patent family members relating to the patent documents cited in  the above-mentioned European search report.
The members are as contained in the European Patent Office EDP file on
The European Patent Office is in no way liable for these particulars which are merely given for the purpose of information.

21-06-2023

| Patent document cited in search report | Publication date | Patent family member(s) | | Publication date |
|---|---|---|---|---|
| | | RU | 2012137282 A | 27-03-2014 |
| | | US | 2012110988 A1 | 10-05-2012 |
| | | US | 2012117952 A1 | 17-05-2012 |
| | | US | 2012117953 A1 | 17-05-2012 |
| | | US | 2012121486 A1 | 17-05-2012 |
| | | US | 2012122660 A1 | 17-05-2012 |
| | | US | 2014065042 A1 | 06-03-2014 |
| | | US | 2014072490 A1 | 13-03-2014 |
| | | WO | 2011092517 A1 | 04-08-2011 |
| | | WO | 2011092519 A1 | 04-08-2011 |
| | | WO | 2011092521 A1 | 04-08-2011 |
| | | WO | 2011092523 A1 | 04-08-2011 |
| | | WO | 2011092525 A1 | 04-08-2011 |

EPO FORM P0459

For more details about this annex : see Official Journal of the European Patent Office, No. 12/82

page 4 of 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021028691 A
- WO 2021165658 A
- WO 2011151711 A
- WO 2005030365 A

**Non-patent literature cited in the description**

- **RONALD M. HECK et al.** Catalytic Air Pollution Control - Commercial Technology. John Wiley & Sons, Inc, 2009, 338-340